# EUROPÄISCHE PATENTANMELDUNG

(11) **EP 1 257 086 A2**
(43) Veröffentlichungstag der Anmeldung: **13.11.2002**
(21) Anmeldenummer: 02100381.9
(22) Anmeldetag: 16.04.2002
(51) Int. Cl.: H04L 12/18, H04Q 7/22

(54) **Vorrichtung und Verfahren zum Übersenden von Information**

(30) Priorität: 07.05.2001 DE 10122079; 11.10.2001 DE 10150106
(71) Anmelder: SIEMENS AKTIENGESELLSCHAFT, 80333 München (DE)
(72) Erfinder: Beckmann, Mark, D-38102, Braunschweig (DE); Eckert, Michael, D-38122, Braunschweig (DE); Hans, Martin, D-31139, Hildesheim (DE); Otte, Andreas, D-29227, Celle (DE)

(57) **Zusammenfassung**

Die vorliegende Erfindung betrifft ein Verfahren zur Übersenden einer Information, eine dementsprechende Vorrichtung und ein Kommunikationssystem. Ferner betrifft die Erfindung insbesondere ein Gebiet, in dem eine Information in elektronischer Form von einem Anbieter an einen registrierten Anwender oder Teilnehmer eines Kommunikationssystems übersandt wird.

Um ein Verfahren, eine Vorrichtung und ein Kommunikationssystem vorzuschlagen, die bei einem höheren Grad von Flexibilität und hoher Verfügbarkeit für einen Anbieter oder Betreiber eines Kommunikationssystems eine zu verarbeitende Datenmenge gesenkt wird, wird vorgeschlagen, daß der Anwender K als Zugangs- und/oder Nutzungsvoraussetzung des Kommunikationssystems S mindestens einer Gruppe G von Anwendern K zugeordnet wird, wobei allen Anwendern K einer Gruppe G die gleiche Information übermittelt werden.

## Beschreibung

Die vorliegende Erfindung betrifft ein Verfahren zur Übersenden einer Information, eine dementsprechende Vorrichtung und ein Kommunikationssystem. Ferner betrifft die Erfindung insbesondere ein Gebiet, in dem eine Information in elektronischer Form von einem Anbieter an einen registrierten Anwender oder Teilnehmer eines Kommunikationssystems übersandt wird.

Unter dem Begriff der Information wird im Rahmen der vorliegenden Erfindung neben jeder Form von Nachricht im wesentlichen eine werbende oder ohne Aufforderung übersandte Information verstanden, insbesondere also ein Angebot, eine Werbeanzeige oder Werbung für ein Produktneuheit und Verbraucherinformation in sonstiger Form.

Bei vielen in bekannten modernen Kommunikationssystemen angebotenen Diensten und Anwendungen sollen Informationen nicht nur zu einem, sondern zu zwei und mehreren Mobilfunkteilnehmern übertragen werden. Beispiele für solche Dienste und Anwendungen sind News-Groups im Internet, Video-Konferenzen, Video-On-Demand, verteilte Anwendungen und vieles mehr. Bei der Übertragung der Nachrichten zu den verschiedenen Teilnehmern ist es möglich, jedem Empfänger separat eine Kopie der Daten zuzusenden. Diese Technik ist zwar unter Verwendung s.g. Unicast-Verbindungen einfach zu implementieren, für große Gruppen jedoch ungeeignet. Da dieselbe Nachricht bei einem Versand an N Empfänger über N Einzelverbindungen übertragen wird und dabei mehrfach über gemeinsame Verbindungswege gesendet wird, benötigt dieses Verfahren eine sehr hohe Bandbreite.

Der vorliegenden Erfindung liegt die Aufgabe zugrunde, ein Verfahren, eine Vorrichtung und ein Kommunikationssystem vorzuschlagen, die bei einem höheren Grad von Flexibilität und hoher Verfügbarkeit für einen Anbieter oder Betreiber eines Kommunikationssystems eine zu verarbeitende Datenmenge gesenkt wird.

Diese Aufgabe wird erfindungsgemäß durch ein Verfahren mit den Merkmalen des Anspruchs 1 und eine Vorrichtung mit den Merkmalen des Anspruchs 11 gelöst. Ferner ist ein Kommunikationssystem mit den Merkmalen von Anspruch 19 eine Lösung dieser Aufgabe. Die Unteransprüche definieren jeweils bevorzugte und vorteilhafte Ausführungsformen der vorliegenden Erfindung.

Ein erfindungsgemäßes Verfahren zeichnet demnach dadurch aus, daß der Anwender als Zugangs- und/oder Nutzungsvoraussetzung des Kommunikationssystems mindestens einer Gruppe von Anwendern zugeordnet wird, wobei allen Anwendern einer Gruppe die gleiche Information übermittelt werden. Dementsprechend weist eine erfindungsgemäße Vorrichtung eine Einrichtung auf, die von dem Anbieter oder Betreiber des Kommunikationssystems über eine Adresse zur Übersendung einer Information angesprochen wird und diese Information selbsttätig an alle in der Einrichtung bekannten oder angemeldeten Teilnehmer versendet. Der Anbieter oder Betreiber des Kommunikationssystems versendet eine jeweilige Information damit nur einmal, wobei die konkrete Verteilung durch die Einrichtung erfolgt. Damit wird die Belastung gemeinsamer Verbindungswege stark gesenkt und dem Anbieter stehen Kapazitäten zur Verfügung, um weitere Informationen an zusätzliche Einrichtungen mit jeweils zugehörigen Teilnehmern zu versenden.

In Weiterbildungen der Erfindung ist vorgesehen, daß Anwender einer Ziel- und/oder Interessengruppe zu einer Gruppe zusammengefaßt werden, wobei einer regionalen Gruppe in einer Weiterbildung eine Broadcast-Adresse zugeordnet wird. Dabei ist ein jeder Anwender mindestens einer derartigen Adresse als Zugangsvoraussetzung zugeordnet. Der Anwender wird in einer bevorzugten Ausführungsform der Erfindung über eine Mobilstation als Schnittstelle zu dem Kommunikationssystem erreicht.

Die Information wird vorzugsweise über das Kommunikationssystem an eine Mobilstation in Form eines Mobiltelefons nach einem bekannten Mobilfunk-Standard übersandt, insbesondere mindestens abschnittsweise nach dem UMTS-Standard von dem Anbieter an den Anwender. Wie nachfolgend noch anhand von Ausführungsbeispielen erläutert können die Daten einer Gruppenzuordnung und ein Nachrichten- und Informationsbezug zwischen Betreiber und Anwender in unterschiedlicher Weise gestaltet werden.

Alternativ oder zusätzlich kann eine Gruppe durch regionale Abgrenzung gebildet werden. Eine Übertragung der Information als Multicast-Nachricht ist ebenfalls möglich.

Die Übersendung einer Information wird vorzugsweise durch eine Anmeldung des Anwenders bei dem Kommunikationssystem ausgelöst, insbesondere durch Einschalten eines Teilnehmer-Endgerätes.

In einer Ausführungsform der Erfindung können auch Rückmeldungen von einer Einrichtung an den Anbieter übersandt werden, insbesondere zur Auswertung einer jeweiligen Auslastung und/oder zur Abrechnung. Eine Auswertung von Nutzungsdaten und/oder sonstiger Daten kann aber auch für einen jeweiligen Anwender vorgenommen werden, so daß der Anwender auf dieser Grundlage in eine oder mehrere Gruppen zur gezielten Versorgung mit Informationen unter Auswertung seines speziellen Kommunikationsverhaltens eingeordnet wird, insbesondere in Form einer automatischen Tarifzuordnung. Ein Nutzungsentgelt für einen bestimmten Anwender kann somit beispielsweise in Abhängigkeit der Art und/oder Anzahl von Gruppen, in denen der Anwender zur Abnahme von Informationen registriert ist, bestimmt werden. Eine Kündigung der Zugehörigkeit zu einer Gruppe kann somit einer Tariferhöhung für die weitere Nutzung eines erfindungsgemäßen Kommunikationssystems gleichgesetzt werden, eine Kündigung auch der letzten Gruppe einer vollständigen Beendigung der Nutzung mit zukünftigem Ausschluß dieses Anwenders aus dem Kommunikationssystem.

Für konkrete Ausgestaltungen und vorteilhafte Nutzungen wird auf die nachfolgende Beschreibung von Ausführungsbeispielen verwiesen.

Um die mögliche Datenrate einer Mobilfunkverbindung bei gleichbleibender beanspruchter Bandbreite steigern zu können, kommen neben neuen Modulationsverfahren auch Kommunikationssysteme mit neuen Netzstrukturen zum Einsatz. In einem erfindungsgemäßen Kommunikationssystem ist dazu eine Einheit mit einer Gruppenadresse vorgesehen, um Aufgaben der Informationsverteilung und Verwaltungsaufgaben konzentriert zu übernehmen. Dementsprechend ist in einem Mobilfunksystem nach dem UMTS-Standard (Universal Mobile Telecommunication System) ein wesentliches Einsatzgebiet von Ausführungsformen der vorliegenden Erfindung zu sehen. Während der Nutzung des Mobilfunkgerätes werden dann in einer Ausführungsform der Erfindung via Multicast-Übertragung beispielsweise Werbebanner oder Logos auf dem Bildschirm bzw. das Display des Empfängers dargestellt. Eine weitere Möglichkeit ist, daß die visuelle oder akustische Übertragung für eine bestimmte Zeit unterbrochen wird, in der dann Informationen des Werbenden via Multicast übertragen werden. Im Gegenzug bekommt der Mobilfunkteilnehmer erfindungsgemäß einen günstigeren monatlichen Grundpreis, geringere Minutenpreise, Freiminuten oder andere Vergünstigungen. Diese Vergünstigungen werden dann durch die werbende Firma subventioniert. Ein Vorteil dieser Ausführungsform gemäß vorliegender Erfindung ist, daß Mobilfunkteilnehmer ein Mobilfunksystem zu günstigen Konditionen nutzen können, wenn sie sich einverstanden erklären, sich bestimmte Nachrichten auf ihrem Mobilfunkgerät anzeigen zu lassen. Für den Betreiber des Mobilfunksystems bietet ein erfinderisches System durch die Übersendung von Werbeinhalten vorteilhafterweise eine weitere Einnahmequelle. Besonders vorteilhaft ist auch, daß Firmen und sonstige Werbetreibende gemäß vorliegender Erfindung die Möglichkeit haben, ihre Produktinformationen einer breiten Öffentlichkeit zugänglich zu machen, wobei ein direkter Kundenzugriff insbesondere bei sehr geringer zeitlicher Verzögerung und geringem Aufwand besteht. Da die Information nur elektronisch existiert entfallen alle sonstigen Formen der körperlichen Herstellung, wie z.B. Druck. Neben der Einsparung von Herstellungskosten und Schonung von Ressourcen ist hiermit ein deutlicher Geschwindigkeitsvorteil gegeben.

Ein wesentliches Merkmal eines erfindungsgemäßen Verfahrens besteht also darin, daß durch einen Betreiber eines Kommunikationssystems oder Anbieter für jeden Anwender oder Teilnehmer eine Mitgliedschaft, Zuordnung oder Registrierung in einer Gruppe von Empfängern bestimmter Information veranlaßt wird. Die Teilnehmer erklären sich erfindungsgemäß bereit, sich von dem Betreiber in mindestens eine bestimmte Gruppe eintragen zu lassen und daraufhin die Nachrichten der entsprechenden Gruppen zu bekommen. Diese Eintragung ist für jeden Anwender eine Zugangs- und/oder Nutzungsvoraussetzung des Kommunikationssystems, wobei allen Anwendern einer Gruppe die gleiche Information übermittelt werden. Ein Anreiz für dieses System wird durch eine vorzugsweise gestufte Subventionierung von Nutzungsentgelten geschaffen, wobei auch eine gebührenfreie Nutzung ermöglicht werden kann.

Die vorliegende Erfindung wird nachfolgend unter Bezugnahme auf die beigefügte Zeichnung anhand bevorzugter Ausführungsbeispiele erläutert.
- Fig. 1: zeigt ein vereinfachtes Blockschaltbild zur Realisierung einer bekannten Struktur zum Informationsversand;
- Fig. 2: zeigt ein vereinfachtes Blockschaltbild eines Grundprinzips einer erfindungsgemäßen Ausführungsform;
- Fig. 3: zeigt ein Blockschaltbild einer Ausführungsform der Erfindung unter Eingliederung in ein Mobilfunksystem nach dem UMTS-Standard;
- Fig. 4: stellt ein Diagramm zur Veranschaulichung des Verlaufs einzelner Signale über der Zeit einer weiteren Ausführungsform der Erfindung dar;
- Fig. 5: zeigt ein Diagramm gemäß der Darstellung von Fig. 4 für eine weiteren Ausführungsform der Erfindung und
- Fig. 6: zeigt ein Blockschaltbild einer Ausführungsform der Erfindung unter Nutzung einer anderen Schnittstelle innerhalb eines Systems gemäß Fig. 3.

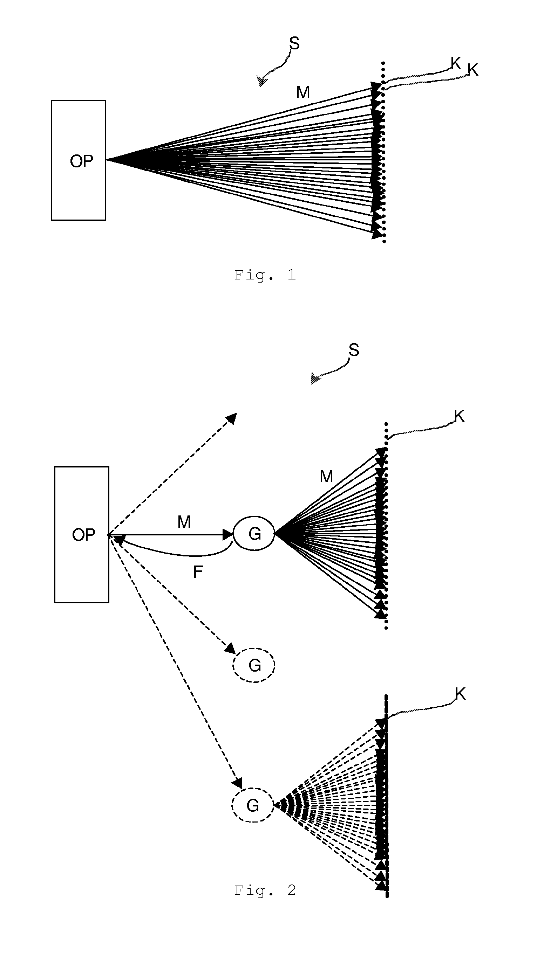

Bei der Darstellung von Fig. 1 handelt es sich um ein vereinfachtes Blockschaltbild, das eine Realisierung einer bekannten Struktur zur Informationsversendung zeigt. In einem Kommunikationssystem S wird eine Nachricht M von einem System-Betreiber OP als Anbieter aus an Teilnehmer K versandt, die innerhalb des Systems S als Anwender und registrierte Kunden diverser Dienste auftreten. Die Nachricht M umfaßt einen werbenden Inhalt, der zur Finanzierung des Kommunikationssystems S beträgt und damit auch die Kosten der Teilnehmer K um einen bestimmten Betrag senkt. Da die Nachricht M jeweils einzeln von dem Betreiber OP an die Teilnehmer K übersandt wird benötigt dieses Verfahren eine hohe Bandbreite und führt zu einer hohen Belastung des Betreibers OP. Eine Struktur nach Fig. 1 ist auch in Mobilfunknetzen verschiedener Operatoren oder Betreiber OP realisiert, in den die Möglichkeit besteht, sich Informationen und Nachrichten zu verschiedenen Themen über auf sein Mobilfunkgerät senden zu lassen. Es besteht beispielsweise die Möglichkeit, sich die aktuellen Börsenkurse, Wetternachrichten, Lottozahlen usw. zusenden zu lassen. Diese Dienst können entsprechend einer Struktur gemäß Fig.1 aber nur sehr wenig Ressourcen-schonend angeboten werden.

Ein Mobilfunkteilnehmer, der einen solchen Dienst in Anspruch nehmen möchte, trägt sich dafür in eine entsprechende Cell Broadcast CB Gruppe ein. Dieses tut er, indem er entsprechende Einstellungen an seinem Mobilfunkgerät vornimmt. Befindet sich das Mobilfunkgerät des Teilnehmers nun in dem vom Operator für eine bestimmte CB Nachricht festgelegten geographischen Gebiet und ist zu der entsprechenden CB Gruppe eingeschrieben, so liest es die entsprechenden Nachrichten immer dann, wenn es zu einer Übertragung kommt. Möchte der Teilnehmer die Nachrichten nicht mehr erhalten, so kann er zu jedem Zeitpunkt entsprechende Einstellungen an seinem Mobilfunkgerät vornehmen und die Nachrichten werden von nun an nicht mehr vom Mobilfunkgerät gelesen.

Eine ähnliche Anwendung ist auch für eine Übertragung von Information im Internet via Multicast MC realisierbar. Die Nachrichten zu bestimmten Themen werden dann nicht mehr wie beim Broadcast BC innerhalb eines geographischen Gebietes verteilt, sondern an eine definierte Gruppe von Teilnehmern, die sich zuvor zu einer entsprechenden Gruppe eingetragen haben.

Eine Möglichkeit zur Senkung der benötigten Bandbreite bietet eine Bündelung der Empfänger in einer Gruppe durch Anwendung einer Multicast-Übertragung MC, wie in der Darstellung von Fig. 2 gezeigt. Die Gruppenzuordnung ist dabei erfindungsgemäß als eine zwingende Bedingung zur Teilnahme innerhalb des Kommunikationssystems S ausgebildet und geht als solche auch in die Kalkulation eines jeweiligen Nutzungsentgelts eines Teilnehmers K ein. Hierbei werden die verschiedenen Teilnehmer, denen dieselbe Nachricht übermittelt werden soll, zu einer Gruppe G als Interessengruppe oder Multicast-Gruppe zusammengefaßt und dieser eine Adresse zugeordnet, der Multicast-Adresse. Die zu übertragenden Daten werden daraufhin nur einmal an diese Adresse gesendet. Neuzugänge in existierende Gruppen verursachen beim OP keinen zusätzlichen Aufwand. Über gemeinsame Verbindungswege vom Sender zu den Empfängern wird die MC-Nachricht im Idealfall nur einmal gesendet. Der Betreiber OP als Sender muß nicht wissen, wo und wie viele Empfänger sich hinter der Multicast Adresse verbergen.

Aufgrund seiner nun im Vergleich zu der Situation von Fig. 1 wesentlich geringeren Belastung kann der Betreiber OP nun in einer hier nur angedeuteten Weiterbildung auch mehrere Informationen an verschiedene Multicast-Gruppen G versenden und von diesen jeweils auch Rückmeldungen F entgegennehmen. Inhalte derartiger Rückmeldungen F sind u.a. Daten über Nutzung oder Auslastung der jeweiligen Gruppe G.

Bei einem anderen Verfahren, einem Broadcast-Verfahren BC, werden Nachrichten M an alle Teilnehmer K innerhalb eines geographischen Gebietes gesendet, also bei regionaler Abgrenzung z.B. bei einem Mobilfunksystem auf einer zellularen Ebene. Strukturell treten zwischen MC und BC keine wesentlichen Unterschiede auf, so daß auch BC anhand der Abbildung von Fig. 2 veranschaulicht werden kann. Ein solches Gebiet kann beispielsweise durch einen Teil des Gesamtnetzes bestimmt sein. Die Übertragung von Informationen via Broadcast zu den Mobilfunkteilnehmern kann dadurch erfolgen, daß der Netzbetreiber dann nicht wie zuvor beschrieben den Eintrag in eine Multicast Gruppe, sondern in eine Broadcast Gruppe veranlaßt. Besonders vorteilhaft ist dabei, daß Nachrichten daraufhin via Broadcast an eine Gruppe von Mobilfunkteilnehmern innerhalb eines definierten geographischen Gebietes übertragen werden. Eine Anwendung dieses Verfahrens besteht darin, spezielle Werbung einer Firma, in dessen Nähe sich ein Mobilfunkteilnehmer gerade befindet, zu übermitteln. Entsprechende Nachrichten könnten dem Mobilfunkteilnehmer dann auch den Weg zu der werbenden Firma anzeigen.

Wie beim Multicast MC wird auch eine Broadcast-Nachricht dabei über gemeinsame Verbindungswege von dem Sender OP zu einem jeweiligen Empfänger K im Idealfall nur einmal gesendet. Jeder Teilnehmer K muß sich, sofern er BC-Nachrichten beispielsweise in Form von Broadcast-Paketen empfangen will, in die entsprechende Broadcast-Gruppe G eintragen. Er kann so bestimmen ob er alle Broadcast-Nachrichten empfangen oder verwerfen möchte, oder ob er nur bestimmte Nachrichten empfangen möchte. Das Entgelt wird in einer Ausführungsform durch eine jeweilige Nutzungsdauer und auch durch die Zahl von Gruppeneintragungen bestimmt, wodurch die Bereitschaft zum Empfangen von Information mehrerer verschiedener Gruppen honoriert wird.

Ein Teilnehmer entscheidet sich zum Abschluß eines neuen Mobilfunk-Vertrages. Erfindungsgemäß kann er nun unter verschiedenen Vertragsbedingungen wählen. Beispielsweise kann dies im Vergleich folgendermaßen aussehen:
1. Standard Konditionen, wie sie nach dem heutigen Stand der Technik üblich sind:
   - monatlicher Grundpreis: 30,00 DM
   - Minutenpreis 8-18h (ins deutsche Festnetz): 0,69 DM
   - Minutenpreis 18-8h (ins deutsche Festnetz): 0,29 DM
   - ...
2. Subventionierte Vertragskonditionen nach einer der vorstehenden Ausführungsformen:
   - monatlicher Grundpreis: 10,00 DM
   - Minutenpreis 8-18h (ins deutsche Festnetz): 0,49 DM
   - Minutenpreis 18-8h (ins deutsche Festnetz): 0,09 DM
   - ...

   ... Der Mobilfunk Teilnehmer (Kunde) ist einverstanden, während der Nutzung seines Mobilfunkgerätes, Werbung, Preis- und Produktinformationen auf seinem Monitor bzw. Display angezeigt zu bekommen ...
   ... Dem Teilnehmer ist bekannt, daß während akustischen Übertragungen (Telephonie), diese für einen bestimmten Zeitraum unterbrochen wird, in dem dann Werbung etc. übertragen wird. Diese Unterbrechungen betragen pro Minute im Schnitt nicht weniger als 5 Sekunden und nicht mehr als 10 Sekunden. ...

Einem Mobilfunkteilnehmer wird auch die Möglichkeit eingeräumt, die Vertragsform nach bestimmten Zeiträumen zu wechseln, falls sich die gewählte Vertragsform als für ihn ungeeignet erweist.

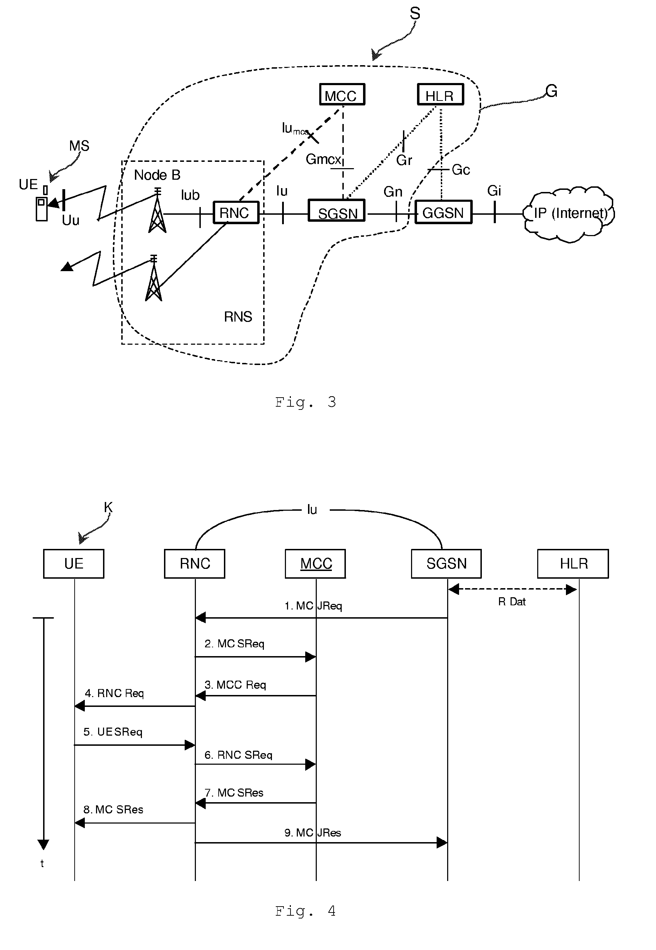

Als besonders bevorzugte Anwendung der vorliegenden Erfindung ist ein Aufbau einer Packet Switched Domain in einem UMTS-(Universal Mobile Telecommunication System-) Mobilfunksystem ist in der Abbildung von Fig. 3 vereinfacht dargestellt. Ein allgemeines Teilnehmer-Endgerät UE ist hier als Mobilstation MS ausgebildet und über eine Luftschnittstelle Uu mit einer Basisstation Node B verbunden. Eine Node B ist über eine Iub Schnittstelle als Festnetzverbindung mit einem Radio Network Controller RNC verbunden, der die Ressourcen der Luftschnittstelle Uu kontrolliert und verteilt. Ein RNC kann eine oder mehrere Knoten vom Typ Node B versorgen. Das System aus einem RNC und den entsprechenden Node Bs wird als Radio Network Subsystem, RNS, bezeichnet.

Für die paketvermittelte Übertragung, beispielsweise für eine Übertragung von IP-Paketen aus dem Internet oder einem Intranet zu einem UE, ist ein RNC über eine Iu-Schnittstelle als Festnetzverbindung mit einem SGSN, Serving GPRS Support Node mit GPRS als Abkürzung für General Paket Radio Service, verbunden. Für eine Übertragung von Daten aus einem fremden Paketdaten-Netz, wie beispielsweise dem Internet, ist der SGSN über eine Gn-Schnittstelle als Festnetzverbindung mit dem Gateway GPRS Support Node, GGSN, verbunden. Dieser GGSN realisiert den Gateway bzw. Zugangspunkt zu einem fremden Paketdaten-Netz. Über eine Gi Schnittstelle als Festnetzverbindung ist der GGSN mit einem Server im Internet oder Intranet verbunden.

Informationen für das Management der mobilen Teilnehmer können vom GGSN über eine Gc-Schnittstelle als Festnetzverbindung und vom SGSN über eine Gr-Schnittstelle als weitere Festnetzverbindung von einem Home Location Register HLR abgefragt werden. Das HLR ist eine Datenbank, die für das Management der mobilen Teilnehmer eines Operators verantwortlich ist. Des weiteren ist der SGSN verantwortlich für einen Verbindungsaufbau zwischen einem Nutzers und einem fremden Paketdatennetz. Sollen Paketdaten aus einem externen Paketdatennetz übertragen werden, so gelangen diese zuerst zum GGSN der beim HLR den zuständigen SGSN erfragt. Dieser GGSN teilt nun dem SGSN mit, daß Daten für das entsprechende UE vorliegen. Der SGSN veranlaßt den Aufbau der Verbindungen zwischen UE und dem externen Netzwerk. Diese Verbindungen sind in der Abbildung von Fig. 3 als Kontroll- oder Steuerverbindungen in Form gestrichelter Linien dargestellt.

Bezüglich der Netzwerkelemente und Schnittstellen zur Unterstützung der Multicast Funktionalität sollen nun für die nachfolgenden Ausführungsbeispiele noch einige Annahmen in einem derzeit noch nicht standardisierten Bereich des UMTS gemacht werden. Es sei darauf hingewiesen, daß es sich hierbei nur um eine mögliche Umsetzung von Multicast im UTRAN handelt:
Ein Multicast Center MCC ist über die logische Schnittstelle Iu_{mcc} mit einem oder mehreren RNCs verbunden. Das MCC hat Verschiedene funktionelle Eigenschaften zur Unterstützung der Multicast Funktionalitäten. Beispielsweise kann es eine Datenbank enthalten, die Informationen wie die Teilnehmer-Identitäten, die zugehörigen MC-Gruppen und die RNCs, die die MC-Teilnehmer versorgen, enthält. Weiterhin veranlaßt das MCC den Verbindungsaufbau zu den entsprechenden RNCs, verteilt die MC Nachrichten in den zuvor festgelegten Service-Gebieten unter Berücksichtigung der tatsächlichen Teilnehmersituation und kontrolliert den Zu- und Abgang von MC Gruppen.

Ein G_{mcx} Interface verbindet als Schnittstelle das MCC und den SGSN. Über diese Schnittstelle werden Informationen als Call Detail Record CDR für die Vergebührung von Aktivitäten der jeweiligen Teilnehmer übertragen. Diese Informationen werden daraufhin von dem SGSN zu der Charging Gateway Function CGF übertragen, der alle weiteren Abläufe bzgl. der Vergebührung triggert. Das MCC kann über die G_{mcx}-Schnittstelle auch Teilnehmer-Informationen vom SGSN anfordern, der diese daraufhin vom HLR anfordert. Zusätzlich können über die Schnittstellen G_{mcx} und Iu_{mcc} neben Steuerbefehlen auch Daten übertragen werden.

Auch diese Ausführungsform der Erfindung gibt außerdem mögliche Informationsflüsse zwischen einem Multicast Center, einem zu einer MC-Gruppe eingeschriebener Teilnehmer, sowie dem SGSN an, mit dem ein Nutzer zum Beitritt zu einer Multicast Gruppe aufgefordert werden kann.

Bei der Betrachtung des Informationsflusses beim erzwungenen Einschreiben in eine Multicast- und/oder Broadcast-Gruppe durch den Netzbetreiber OP werden nachfolgend verschiedene Fälle betrachtet. Die nachfolgenden Ausführungsformen unterscheiden sich darin, über welche Verbindungen zwischen den Netzelementen die entsprechenden Nachrichten ausgetauscht werden und welche Netzwerkelemente die Kontrollfunktion für die Einschreiben realisieren. Während der Anmeldeprozedur (GPRS attach procedure, siehe 3GPP TS 23.060, General Packet Radio Service (GPRS), Service Description, Stage 2, Release 99, u.a. erhältlich im Internet unter www.3GPP.org) eines UEs an dem Netzwerk, wird erfindungsgemäß die erzwungene Einschreibung zu einer Multicast Gruppe veranlaßt. In dem nachfolgend anhand der Abbildung von Fig. 3 beschriebenen Ausführungsformen umfaßt das Netzwerkelement G gemäß Fig. 2 den Netzwerkausschnitt ab dem GGSN bis einschließlich der Node Bs auf zellularer Ebene. Der SGSN weiß, entsprechend dem Profil eines zu einer MC-Gruppe eingeschriebenen Teilnehmers z.B. aus dem HLR, welcher Multicast Gruppe ein bestimmter Teilnehmer betreten muß und erzwingt die Mitgliedschaft zu einer jeweiligen Gruppen.

Die einzelnen Informationen, die unter Nutzung der Iu-Schnittstelle zwischen MCC und SGSN zwischen den Netzelementen ausgetauscht werden, sind in der Abbildung von Fig. 4 der Reihe nach über der Zeit t dargestellt, wobei hier das Multicast Center MCC als zentrales Kontroll-Netzelement dient:
1. Der SGSN sendet eine Anfragenachricht zur Aufnahme in eine Multicast Gruppe, MC JReq, mit Teilnehmer ID und Multicast Group zum RNC. Diese enthält erfindungsgemäß eine Identität des Nutzers als Teilnehmer ID und eine Identität der Multicast Gruppe MC, zu der der betreffende Anwender K als Zu einer MC-Gruppe eingeschriebener Teilnehmer auf Grund seines Vertrags beitreten muß.
2. RNC sendet daraufhin eine Einschreibungsanfrage, MC SReq, mit Teilnehmer ID und Multicast Group zum MCC.
3. MCC sendet erfindungsgemäß eine Anfrage auf MC-Einschreibung, MMC Req, mit Teilnehmer ID und Multicast Group sowie einer Parameterfolge QoS zur Angabe der Service-Qualität und zum RNC.
4. RNC sendet eine eigene Anfrage auf MC-Einschreibung, RNC Req, mit Teilnehmer ID und Multicast Group zum UE.
5. Wenn das UE der vorgeschlagenen Konfiguration zustimmt, sendet es eine Einschreibungsanfrage UE SReq, , mit Teilnehmer ID und Multicast Group zum RNC.
6. RNC sendet eine Einschreibungsanfrage RNC SReq, mit Teilnehmer ID und Multicast Group zum MCC.
7. MCC sendet eine Einschreibungsantwort MC SRes, mit Teilnehmer ID und Multicast Group zum RNC.
8. RNC leitet die Nachricht MC SRes zum UE weiter.
9. RNC bestätigt dem SGSN die erfolgreiche Einschreibung des Teilnehmers, indem er ihm eine Aufnahmeantwort MC JRes mit Teilnehmer ID und Multicast Group ID sendet. Damit ist der Verbindungsaufbau abgeschlossen.

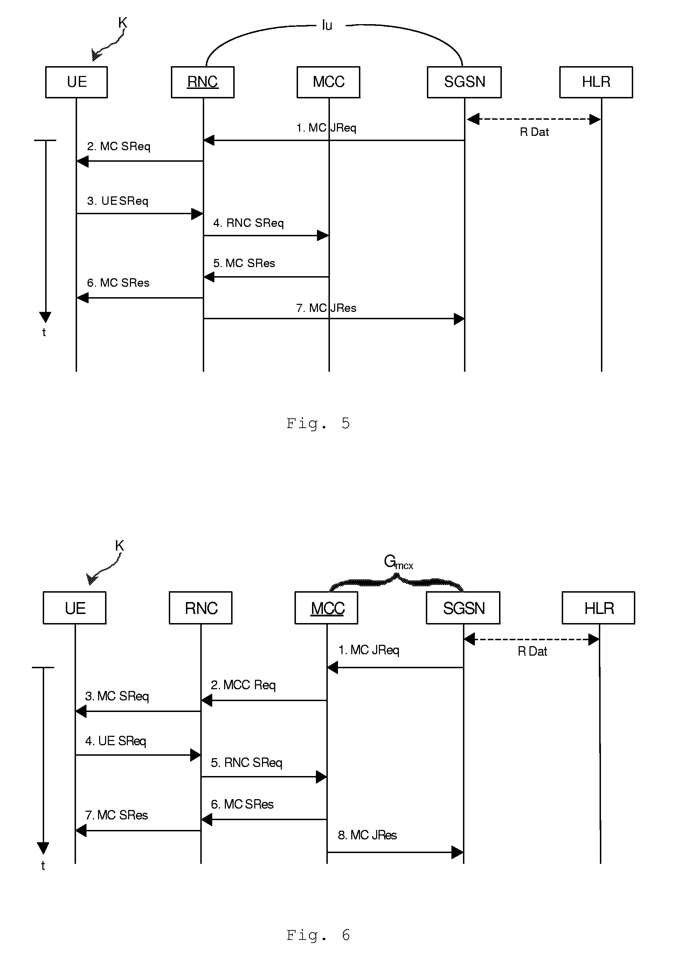

Unter Nutzung der Iu-Schnittstelle zwischen MCC und SGSN wird in einer weiteren Ausführungsform der Erfindung das RNC als zentrales Kontroll-Netzelement genutzt. Die einzelnen Informationen, die hierbei zwischen den Netzelementen ausgetauscht werden, sind in der Abbildung von Fig. 5 in zeitlicher Reihenfolge dargestellt, wobei die Bezeichnungen für Nachrichten mit annähernd gleichem Inhalt wie in Fig. 4 weitgehend beibehalten werden:
1. Der SGSN sendet eine MC JReq Nachricht mit Teilnehmer ID und Multicast Group zum RNC.
2. RNC sendet eine MC SReq Anfragenachricht mit Teilnehmer ID und Multicast Group zum UE.
3. Wenn das UE der vorgeschlagenen Konfiguration zustimmt, sendet es eine UE SReq Nachricht mit Teilnehmer ID und Multicast Group zum RNC.
4. RNC sendet eine RNC SReq Anfrage mit Teilnehmer ID und Multicast Group zum MCC.
5. MCC speichert den Teilnehmer K als ein neues Mitglied der indizierten Multicast Gruppe und sendet eine MC SRes als Einschreibungsbestätigung mit Teilnehmer ID und Multicast Group zum RNC.
6. RNC leitet die Einschreibungsbestätigung MC SRes zum UE weiter.
7. RNC bestätigt dem SGSN die erfolgreiche Einschreibung des Teilnehmers, indem er ihm eine MC JRes Nachricht mit Teilnehmer ID und Multicast Group ID sendet.

Schließlich wird noch die Nutzung der G_{mcx} Schnittstelle zwischen MCC und SGSN betrachtet, wobei MCC das zentrale Kontroll-Netzelement bildet. Wie auch in den vorangehenden Ausführungsbeispielen kann HLR vorab die Informationen zu einem jeweiligen Teilnehmer an SGSN übermitteln, wie gestrichelt dargestellt. Die einzelnen Informationen, die hierbei zwischen den Netzelementen ausgetauscht werden, sind in der Abbildung von Fig. 6 wiederum in zeitlicher Reihenfolge dargestellt:
1. Der SGSN sendet eine MC JReq mit Teilnehmer ID und RNC ID sowie Multicast Group zum MCC.
2. MCC sendet eine Anfragenachricht MCC Req mit Teilnehmer ID und Multicast Group zum RNC.
3. RNC sendet daraufhin eine Anfragenachricht MC Sreq mit Teilnehmer ID und Multicast Group zum UE.
4. Wenn das UE der vorgeschlagenen Konfiguration zustimmt, sendet es eine UE SReq Nachricht mit Teilnehmer ID und Multicast Group zum RNC.
5. RNC sendet nach Eingang der UE SReq Nachricht eine RNC SReq Nachricht mit Teilnehmer ID und Multicast Group-Kennung bzw. Multicast Group ID zum MCC.
6. MCC bestätigt die erfolgreiche Einschreibung des Teilnehmers K und sendet eine MC SRes mit Teilnehmer ID und Multicast Group ID zum RNC.
7. RNC leitet die MC SRes Nachricht zum UE weiter.
8. MCC bestätigt dem SGSN schließlich die erfolgreiche Einschreibung mit Hilfe einer MC JRes Nachricht mit Teilnehmer ID und Multicast Group ID.

In jedem der vorstehend genannten Fälle gilt, daß das Netzwerk erfindungsgemäß dem Nutzer bzw. UE daraufhin die Anmeldung am Netzwerk verweigern kann, falls sich ein UE nicht bereit erklärt, der Multicast Gruppe beizutreten. Eine Verweigerung eines Beitritts zu einer Multicast Gruppe kann insbesondere dadurch erfolgen, daß das UE der vorgeschlagenen Konfiguration der 'Request MC subscription message' nicht zu stimmt.

Weiter kann eine vorstehend beschriebene Übertragung von Informationen auch via Punkt-zu-Punkt Verbindungen zu den entsprechenden Mobilfunkteilnehmern über Einzelverbindungen übertragen werden. Der Netzbetreiber veranlaßt dann nicht wie zuvor beschrieben den Eintrag in eine Multicast oder Broadcast Gruppe, sondern ganz allgemein in eine bestimmte Gruppe XY, die mit Information der vorstehend genannten Art versorgt werden soll.

Aufgrund der Senkung einer erforderlichen Bandbreite auf Kanälen zwischen einem Anbieter OP und vielen Teilnehmern K kann ein erfindungsgemäßes System mit einem vorstehend beschriebenen Verfahren an Standards diverser Kommunikationssysteme angepaßt werden. Auch wenn ein Einsatz in einem UMTS-System mit diversen Anpassungsvarianten sehr detailliert dargestellt worden ist wird jedoch ein vorteilhafter Einsatz in sonstigen Anwendungen nicht ausgeschlossen.

## Patentansprüche

1. Verfahren zur Übersenden einer Information (M), in dem eine Information (M) in elektronischer Form von einem Anbieter (OP) an einen registrierten Anwender oder Teilnehmer (K) eines Kommunikationssystems (S) übersandt wird,
**dadurch gekennzeichnet,**
**daß** der Anwender (K) als Zugangs- und/oder Nutzungsvoraussetzung des Kommunikationssystems (S) mindestens einer Gruppe (G) von Anwendern (K) zugeordnet wird, wobei allen Anwendern (K) einer Gruppe (G) die gleiche Information übermittelt wird.

2. Verfahren nach Anspruch 1,
**dadurch gekennzeichnet,**
**daß** Anwender (K) einer Ziel- und/oder Interessengruppe zu einer Gruppe (G) zusammengefaßt werden.

3. Verfahren nach einem der beiden vorhergehenden Ansprüche,
**dadurch gekennzeichnet,**
**daß** der Gruppe (G) eine Broadcast Adresse (BC) zugeordnet wird.

4. Verfahren nach einem der vorhergehenden Ansprüche,
**dadurch gekennzeichnet,**
**daß** der Anwender (K) über eine Mobilstation (MS) als Schnittstelle zu dem Kommunikationssystem (S) erreicht wird.

5. Verfahren nach dem vorhergehenden Anspruch,
**dadurch gekennzeichnet,**
**daß** die Information (M) über das Kommunikationssystem (S) an eine Mobilstation (MS) in Form eines Mobiltelefons nach einem bekannten Mobilfunk-Standard übersandt wird.

6. Verfahren nach einem der vorhergehenden Ansprüche,
**dadurch gekennzeichnet,**
**daß** die Information (S) mindestens abschnittsweise nach dem UMTS-Standard von dem Anbieter (OP) an den Anwender (K) übertragen wird.

7. Verfahren nach einem der vorhergehenden Ansprüche,
**dadurch gekennzeichnet,**
**daß** eine Gruppe (G) durch regionale Abgrenzung gebildet wird.

8. Verfahren nach einem der vorhergehenden Ansprüche,
**dadurch gekennzeichnet,**
**daß** die Übersendung einer Information (M) durch eine Anmeldung des Anwenders (K) bei dem Kommunikationssystem (S) ausgelöst wird, insbesondere durch Einschalten eines Teilnehmer-Endgerätes (UE).

9. Verfahren nach einem der vorhergehenden Ansprüche,
**dadurch gekennzeichnet,**
**daß** eine Auswertung von Nutzungsdaten und/oder sonstiger Daten (F) eines Anwenders (K) vorgenommen wird und der Anwender (K) auf dieser Grundlage in eine oder mehrere Gruppen (G) zur gezielten Versorgung mit Informationen zugeordnet wird, insbesondere automatisch.

10. Verfahren nach einem der vorhergehenden Ansprüche,
**dadurch gekennzeichnet,**
**daß** ein Nutzungsentgelt für einen Anwender (K) in Abhängigkeit der Art und/oder Anzahl von Gruppen (G) bestimmt wird.

11. Vorrichtung zur Übersenden einer Information (M) in elektronischer Form von einem Anbieter (OP) an einen registrierten Anwender (K) oder Teilnehmer eines Kommunikationssystems (S),
**dadurch gekennzeichnet,**
**daß** eine Einrichtung (G) vorgesehen ist, die mit dem Anbieter (OP) oder Betreiber des Kommunikationssystems (S) zur Übersendung einer Information (M) verbunden ist, jeder Anwender (K) oder Teilnehmer in der Einrichtung (G) eingetragen ist und
die Einrichtung (G) zur Versendung der erhaltenen Information (M) an alle in der Einrichtung (G) bekannten oder angemeldeten Teilnehmer (K) ausgebildet ist.

12. Vorrichtung nach dem vorhergehenden Anspruch,
**dadurch gekennzeichnet,**
**daß** mehrere Einrichtungen (G) vorgesehen sind, die über je einen Kanal mit einer bestimmten Adresse mit dem Anbieter (OP) oder Betreiber des Kommunikationssystems (S) zur Übersendung einer Information (M) verbunden sind.

13. Vorrichtung nach einem der beiden vorhergehenden Ansprüche, **dadurch gekennzeichnet, daß** die Einrichtung (G) zur Auswendung und/oder Rücksendung einer Rückmeldung (F) an den Anbieter (OP) oder Betreiber des Kommunikationssystems (S) ausgebildet ist.

14. Vorrichtung nach einem der vorhergehenden Ansprüche,
**dadurch gekennzeichnet,**
**daß** als Kanal zur Übersendung einer Information (M) mindestens abschnittsweise eine Mobilfunkverbindung vorgesehen ist.

15. Vorrichtung nach einem der vorhergehenden Ansprüche,
**dadurch gekennzeichnet,**
**daß** sie ein mobiles Teilnehmer-Endgerät (UE) eines zellularen Daten- und/oder Kommunikationsnetzes (S) enthält, insbesondere ein Mobiltelefon bzw. Handy nach dem UMTS-Standard.

16. Vorrichtung nach dem vorhergehenden Anspruch,
**dadurch gekennzeichnet,**
**daß** die Einrichtung (G) in dem Daten- und/oder Kommunikationsnetz (S) zwischen verteilt vorgesehen ist.

17. Vorrichtung nach einem der beiden vorhergehenden Ansprüche, **dadurch gekennzeichnet, daß** innerhalb des Kommunikationsnetzes (S) ein Serving GRPS Support Node (SGSN) zur Abfrage eines Anwender-Profiles mit mindestens einem Eintrag für eine Gruppe (G) aus einer Datenbank.

18. Vorrichtung nach dem vorhergehenden Anspruch,
**dadurch gekennzeichnet,**
**daß** die Datenbank als Home Location Register (HLR) ausgebildet ist.

19. Kommunikationssystem zum Austausch von Daten, bei dem jeder Anwender (K) oder Teilnehmer bei einem Anbieter oder Netzbetreiber (OP) registriert ist,
**dadurch gekennzeichnet,**
**daß** das Kommunikationssystem ein Kommunikationsnetz (S) mit einer Vorrichtung gemäß einem der vorhergehenden Ansprüche 11 bis 18 und/oder zur Umsetzung eines Verfahrens nach einem der Ansprüche 1 bis 10 ausgebildet ist.

20. Kommunikationssystem nach einem der beiden vorhergehenden Ansprüche, **dadurch gekennzeichnet, daß** die Sende- und/oder Empfangseinheit als mobile Einheit (UE) ausgebildet ist.

21. Kommunikationssystem nach einem vorhergehenden Ansprüche,
**dadurch gekennzeichnet,**
**daß** die Sende- und/oder Empfangseinheit als Mobiltelefon oder mobile Datenübertragungseinrichtung nach dem UMTS-Standard ausgebildet ist.
